# EUROPÄISCHE PATENTSCHRIFT

(11) **EP 1 329 660 B1**
(45) Veröffentlichungstag und Bekanntmachung des Hinweises auf die Patenterteilung: **03.05.2006**
(21) Anmeldenummer: 02025459.5
(22) Anmeldetag: 15.11.2002
(51) Int. Cl.: F16L 11/12

(54) **Flexibler, mehrschichtiger, beheizbarer Schlauch**
Heatable flexible multilayer hose
Tuyau flexible multicouche chauffable

(30) Priorität: 19.01.2002 DE 10201920
(43) Veröffentlichungstag der Anmeldung: 23.07.2003
(73) Patentinhaber: ContiTech Schlauch GmbH, 30165 Hannover (DE)
(72) Erfinder: Besche, Anton, 34497 Korbach (DE); Schmelter, Klaus, 59929 Brilon (DE)
(74) Vertreter: Finger, Karsten

(56) Entgegenhaltungen:
- DE-A- 4 118 926
- DE-A- 19 915 228
- US-A- 4 553 023

## Beschreibung

Die Erfindung betrifft einen flexiblen mehrschichtigen beheizbaren Schlauch nach dem Oberbegriff des Anspruchs 1.

Aus der DE 199 15 228 A1 ist ein flexibler, beheizbarer Druckschlauch für Kraftfahrzeuge bekannt. Ein derartiger Druckschlauch umfasst eine radial innere und eine radial äußere Gummischicht sowie eine Zwischenschicht, in der ein Verstärkungsgewebe bzw. -geflecht eingebettet ist. In dieses Verstärkungsgewebe bzw. -geflecht ist mindestens ein elektrischer Widerstandsdraht, ein sogenannter Heizleiter, zur Beheizung eines innerhalb des Schlauches fließenden Mediums eingewoben bzw. eingeflochten. Dazu ist der elektrische Heizleiter über seine Enden an eine Spannungsquelle angeschlossen. Außerdem kann die genannte Zwischenschicht ein weiteres Verstärkungsgewebe bzw. -geflecht umfassen, wobei in einem der beiden Verstärkungsgewebe bzw. -geflechte der elektrische Heizleiter eingewoben bzw. eingeflochten ist. Der elektrische Heizleiter weist üblicherweise eine metallische Seele und eine elektrisch isolierende Ummantelung auf, die verhindert, dass ein über Kreuz gelegter Heizleiter während des Betriebes einen Kurzschluss verursacht.

Es hat sich nun als äußerst aufwendig herausgestellt, die Enden des innig mit dem Verstärkungsgewebe bzw. -geflecht verbundenen Heizleiters derart freizulegen, dass ein Anschluss an die zum Betreiben des Heizleiters erforderliche Spannungsquelle möglich ist. Insbesondere dann, wenn sich der Heizleiter nur über einen Teilbereich der Schlauchlänge erstreckt, ist es schwierig, die Enden des Heizleiters zu lokalisieren und für eine sichere elektrische Kontaktierung freizulegen.

Als nachteilig hat sich auch herausgestellt, dass das homogene Verstärkungsgewebe bzw. - geflecht beim Freilegen der Enden des Heizleiters häufig beschädigt wird. Dadurch ist nicht mehr gewährleistet, dass das Verstärkungsgewebe bzw. -geflecht seine vorgegebene Funktion erfüllt.

Weiterhin hat sich gezeigt, dass es beim Freilegen der Enden des Heizleiters zu Beschädigungen an der Ummantelung der metallische Seele kommen kann, die insbesondere bei auftretender Feuchtigkeit im Verstärkungsgewebe bzw. -geflecht zu Kurzschlüssen führen können.

Ferner ist aus der US-A-4 553 023 ein thermisch isolierter, elektrisch beheizbarer Schlauch zum Transport von Flüssigkeiten bekannt. Der Schlauch umfasst eine innere Röhre, eine darüber liegende Verstärkungsschicht, um die elektrische Heizdrähte gewickelt sind, und schließlich eine aus fünf Einzellagen bestehende Ummantelung. Dabei besteht eine der fünf Einzellagen aus einem Aramidfasermaterial und eine weitere aus einem Glasfasermaterial. Zum Herausführen der elektrischen Heizdrähte wird die Ummantelung in Längsrichtung aufgeschnitten und gespreizt, so dass die freiliegenden elektrischen Heizdrähte abgewickelt und durch den gebildeten Spalt in der Ummantelung nach außen gelegt werden können. Anschließend wird die Ummantelung wieder zusammengedrückt und durch Umwickeln mit einem Kunststoffband verschlossen.

Der Erfindung liegt die Aufgabe zugrunde, einen flexiblen mehrschichtigen beheizbaren Schlauch mit wenigstens einem Heizleiter derart weiterzuentwickeln, dass eine einfache und sichere elektrische Kontaktierung des Heizleiters mit einer Spannungsquelle möglich ist.

Diese Aufgabe wird bei einem flexiblen mehrschichtigen beheizbaren Schlauch nach dem Oberbegriff des Anspruchs 1 durch die Merkmale dieses Anspruchs gelöst.

Weiterbildungen und vorteilhafte Ausgestaltungen ergeben sich aus den Unteransprüchen.

Durch die Anordnung des Heizleiters außerhalb der äußeren Lage der Verstärkungsschicht aber unter oder innerhalb der elastomeren Außenschicht lässt sich der Heizleiter ohne Eingriff in die Verstärkungsschicht freilegen. Eine Schädigung der Verstärkungsschicht ist so ausgeschlossen. Die Verstärkungsschicht kann also ihre vorgegebene Funktion erfüllen und beispielsweise in einem Druckschlauch eine vorgegebene hohe Druckimpulsfestigkeit des Schlauches sicherstellen.

Der Heizleiter kann durch eine radial nach außen einwirkende Kraft unter Durchtrennen der ursprünglichen oder geschwächten elastomeren Außenschicht aber ohne Schädigung seiner metallischen Seele und seiner Ummantelung freigelegt werden. Dieser Vorgang kann im einfachsten Fall mit einer Zange durchgeführt werden, mit der die am stirnseitigen Ende eines Schlauchabschnittes frei zugänglichen Enden des Heizleiters erfasst und radial nach außen gezogen werden. Durch Erhalt der Ummantelung wird hierbei die elektrische Isolation gewahrt, so dass es zu keiner Beeinträchtigung der metallischen Seele durch Korrosion oder Kurzschluß in Folge eindringender Feuchtigkeit kommen kann. Auch die Funktion der elastomeren Außenschicht wird beibehalten, denn die elastomere Außenschicht wird nur in dem unmittelbaren Bereich aufgetrennt, in dem der Heizleiter radial nach außen gezogen wird. Aufgrund der elastomeren Eigenschaft kann sich Trennfuge anschließend wieder weitgehend schließen. Im übrigen Bereich bleibt die elastomere Außenschicht völlig unbeeinträchtigt. Der Heizleiter kann daher unmittelbar, also ohne zusätzliche Isolierung zu einer elektrischen Anschlussvorrichtung geführt und dort elektrisch verbunden werden. Korrosionsgefährdete Bereiche oder Übergänge des Heizleiters zwischen dem Schlauch und der elektrischen Anschlussvorrichtung sind nicht vorhanden.

Es besteht aber auch die Möglichkeit, das so präparierte Schlauchende, also das Schlauchende mit dem herausgelösten Heizleiter, abzutrennen und somit die Beheizung des Schlauches über die gesamte Schlauchlänge zu gewährleisten.

Vorzugsweise weist die elastomere Außenschicht in ihrer ursprünglichen Dicke eine geringere Festigkeit als der Heizleiter bei Aufprägen der radial nach außen einwirkende Kraft aufweist.

Dadurch diese Bemessung der Festigkeit wird erreicht, dass der Heizleiter auch ohne Schwächung der elastomeren Außenschicht durch diese hindurch herausgezogen werden kann. Der Installationsvorgang der elektrischen Anschlussvorrichtung wird dadurch erheblich erleichtert.

Alternativ kann die elastomere Außenschicht auch durch Abtragen ihrer Schichtdicke in ihrer Festigkeit verringert werden, so dass sie dann eine geringere Festigkeit als der Heizleiter bei Aufprägen der radial nach außen einwirkende Kraft aufweist.

In diesem Fall werden Einschränkungen der Festigkeit der elastomeren Außenschicht in ihrer ursprünglichen Dicke vermieden.

Vorzugsweise verläuft der Heizleiter zumindest in einem Teilbereich der Schlauchlänge wendelförmig unter oder innerhalb der elastomeren Außenschicht.

Der Heizleiter kann so durch teilweises Abwickeln seiner Wendel aus der Außenschicht herausgezogen werden. Im übrigen Bereich kann sich der Heizleiter Dehnungen- und Biegungen des Schlauches anpassen. Außerdem wird durch die wendelförmige Anordnung eine gleichmäßige Beheizung des durch den Schlauch fließenden Mediums erreicht.

Nachfolgend wird die Erfindung anhand der Zeichnung erläutert. In dieser zeigt:
- Fig. 1: eine schematische perspektivische Ansicht des erfindungsgemäßen Schlauches mit teilweise entfernter Außenschicht und einem Heizleiter,
- Fig. 2: eine schematische perspektivische Ansicht des erfindungsgemäßen Schlauches mit teilweise entfernter Außenschicht und zwei Heizleitern,
- Fig. 3.: eine schematische perspektivische Ansicht des erfindungsgemäßen Schlauches im noch unpräparierten Zustand und
- Fig. 4: eine schematische perspektivische Ansicht des erfindungsgemäßen Schlauches mit einem durch die Außenschicht herausgezogenen Heizleiter.

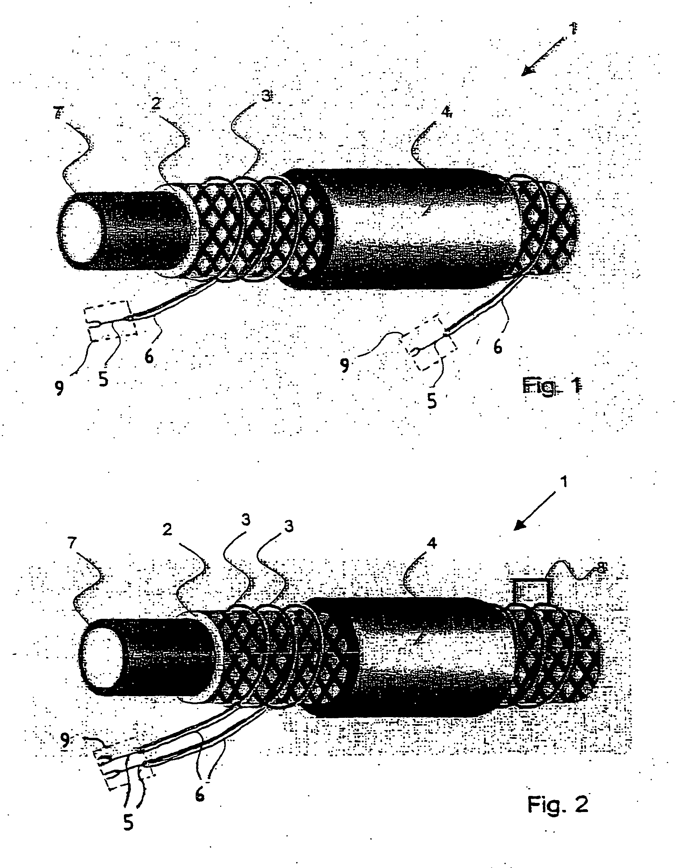

Der in Fig. 1 dargestellte Schlauch 1 besteht aus einer elastomeren Innenschicht 7, einem darüber liegenden Textilgeflecht als Verstärkungsschicht 2 sowie einer elastomeren Außenschicht 4. Auf die Verstärkungsschicht 2 ist wendelförmig ein elektrischer Heizleiter 3 aufgebracht, der aus einer metallischen Seele 5 und einer isolierenden Ummantelung 6 besteht. Der Heizleiter 3 ist in die elastomere Außenschicht 4 eingebettet.

Für den Anschluss an eine Spannungsquelle werden die Enden des Heizleiters 3 erfmdungsgemäß auf einfache Weise durch Herausziehen aus der elastomere Außenschicht 4 freigelegt, zu einer elektrischen Anschlussvorrichtung 9 geführt und mit dieser verbunden. And die Anschlussvorrichtung 9 kann dann eine Spannungsquelle angeschlossen werden.

Der in Fig. 2 dargestellte Schlauch 1 besteht wie der Schlauch 1 in Fig. 1 aus einer elastomeren Innenschicht 7, einem darüber liegenden Textilgeflecht als Verstärkungsschicht 2 sowie einer elastomeren Außenschicht 4. Im Unterschied zu Fig. 1 sind in Fig. 2 zwei Heizleiter 3 wendelförmig in die elastomere Außenschicht 4 eingebettet. Nicht gesondert dargestellt, aber möglich, sind auch mehr als zwei Heizleiter.

Für den Anschluss der Heizleiter 3 bei der Ausführung nach Fig. 2 werden die linksseitigen Enden der beiden Heizleiter 3 durch Herausziehen aus der elastomeren Außenschicht 4 freigelegt, zu einer elektrischen Anschlussvorrichtung 9 geführt und mit dieser verbunden. Die rechtsseitigen Enden der beiden Heizleiter 3 werden dagegen aus der elastomeren Außenschicht 4 herausgezogen und miteinander elektrisch verbunden. Dies ist in Fig. 2 schematisch durch eine Brücke 8 dargestellt. Der Vorteil gegenüber dem in Fig. 1 gezeigten Schlauch 1 besteht darin, dass entlang des Schlauches 1 kein separates Kabel zur Spannungsquelle verlegt werden muss.

Werden über die Darstellung nach Fig. 2 hinaus, mehrere Heizleiter verwendet, besteht die Möglichkeit, diese unterschiedlich in einer Parallel- oder Serienschaltung zu kombinieren, um so den elektrischen Widerstand zu variieren.

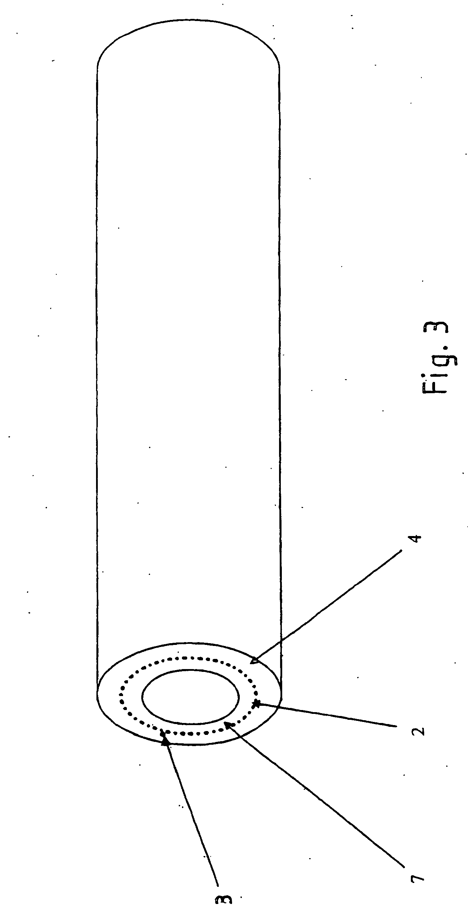

Fig. 3 zeigt eine schematische perspektivische Ansicht des erfindungsgemäßen Schlauches im noch unpräparierten Zustand. An der Stirnseite eines Schlauchabschnittes, der aus einem endlos gefertigten Schlauch abgeschnitten wurde, sind die elastomere Innenschicht 7, die Verstärkungsschicht 2 und die elastomere Außenschicht 4 sowie das Ende des Heizleiters 3 sichtbar. Dieser kann mit einer Zange erfasst und unter Bildung einer Trennfuge durch die elastomere Außenschicht 4 herausgezogen werden.

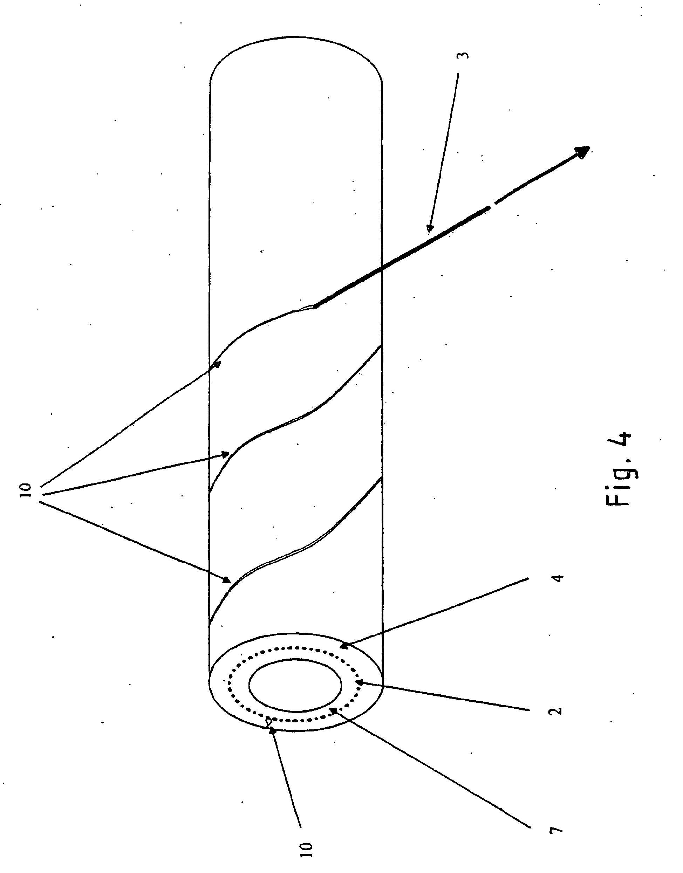

Fig. 4 zeigt schließlich eine schematische perspektivische Ansicht des erfindungsgemäßen Schlauches 1 mit einem durch die Außenschicht 4 radial nach außen herausgezogenen Heizleiter 3. Dabei hat der Heizleiter 3 die elastomere Außenschicht 4 durchschnitten und hinterlässt eine Trennfuge 10, die sich jedoch anschließend aufgrund der elastischen Eigenschaft der Außenschicht 4 anschließend wieder teilweise schließt.

Der Heizleiter 3 wird unter Abwickeln der Wendel soweit herausgezogen, wie es für die Verbindung zur elektrischen Anschlussvorrichtung 9 erforderlich ist. Anschließend wird durch Entfernen eines Teils der Ummantelung 6 die metallische Seele 5 freigelegt und mit der Anschlussvorrichtung 9 kontaktiert.

### Bezugszeichenliste

- 1: Schlauch
- 2: Verstärkungsschicht
- 3: Heizleiter
- 4: elastomere Außenschicht
- 5: metallische Seele
- 6: Ummantelung
- 7: Innenschicht
- 8: Brücke
- 9: Anschlußvorrichtung
- 10: Trennfuge

## Patentansprüche

1. Flexibler mehrschichtiger beheizbarer Schlauch (1) mit wenigstens einer Verstärkungsschicht (2) und einer elastomeren Außenschicht (4) sowie einem zur Erwärmung eines im Schlauch (1) fließenden Mediums dienenden elektrischen Heizleiter (3), der sich über zumindest einen Teilbereich der Schlauchlänge erstreckt und aus einer metallischen Seele (5) und einer Ummantelung (6) besteht, wobei der Heizleiter (3) unter oder innerhalb der elastomeren Außenschicht (4) eingebettet ist, **dadurch gekennzeichnet, dass** der Heizleiter außerhalb der Verstärkungsschicht angeordnet ist und dass die elastomere Außenschicht (4) eine geringere Festigkeit als der Heizleiter (3) aufweist, die so bemessen ist, dass der Heizleiter (3) durch eine radial nach außen einwirkende Kraft unter Durchtrennen der ursprünglichen oder geschwächten elastomeren Außenschicht (4) aber ohne Schädigung seiner metallischen Seele (5) und seiner Ummantelung (6) freilegbar und unmittelbar mit einer elektrischen Anschlussvorrichtung (9) elektrisch verbindbar ist.

2. Flexibler mehrschichtiger beheizbarer Schlauch (1) nach Anspruch 1, **dadurch gekennzeichnet, dass** die elastomere Außenschicht (4) im unpräparierten Zustand des Schlauches eine geringere Festigkeit als der Heizleiter (3) bei Aufprägen der radial nach außen einwirkende Kraft aufweist.

3. Flexibler mehrschichtiger beheizbarer Schlauch (1) nach Anspruch 1, **dadurch gekennzeichnet, dass** die elastomere Außenschicht (4) durch Abtragen in ihrer Schichtdicke gegenüber dem unpräparierten Zustand geschwächt ist und eine geringere Festigkeit als der Heizleiter (3) bei Aufprägen der radial nach außen einwirkende Kraft aufweist.

4. Flexibler mehrschichtiger beheizbarer Schlauch (1) nach einem der Ansprüche 1 bis 3, **dadurch gekennzeichnet, dass** der Heizleiter (3) zumindest in einem Teilbereich der Schlauchlänge wendelförmig unter oder innerhalb der elastomeren Außenschicht (4) verläuft.

## Revendications

1. Tuyau flexible multicouche chauffable (1) comprenant au moins une couche de renforcement (2) et une couche extérieure élastomère (4) ainsi qu'un conducteur chauffant électrique (3) servant à réchauffer un fluide s'écoulant dans le tuyau (1), lequel s'étend sur au moins une région partielle de la longueur du tuyau et se compose d'une âme métallique (5) et d'une gaine (6), le conducteur chauffant (3) étant noyé en dessous ou à l'intérieur de la couche extérieure élastomère (4), **caractérisé en ce que** le conducteur chauffant est disposé en dehors de la couche de renforcement et **en ce que** la couche extérieure élastomère (4) présente une solidité inférieure à celle du conducteur chauffant (3), qui est dimensionnée de telle sorte que le conducteur chauffant (3) puisse être exposé et relié électriquement directement à un dispositif de raccordement électrique (9) par une force agissant radialement vers l'extérieur par découpe de la couche extérieure élastomère d'origine ou affaiblie (4) mais sans endommager son âme métallique (5) et sa gaine (6).

2. Tuyau flexible multicouche chauffable (1) selon la revendication 1, **caractérisé en ce que** la couche extérieure élastomère (4) présente, dans l'état non préparé du tuyau, une solidité inférieure à celle du conducteur chauffant (3) lors de l'application de la force agissant radialement vers l'extérieur.

3. Tuyau flexible multicouche chauffable (1) selon la revendication 1, **caractérisé en ce que** la couche extérieure élastomère (4) est affaiblie par enlèvement dans son épaisseur de couche par rapport à l'état non préparé et présente une solidité inférieure à celle du conducteur chauffant (3) lors de l'application de la force agissant radialement vers l'extérieur.

4. Tuyau flexible multicouche chauffable (1) selon l'une quelconque des revendications 1 à 3, **caractérisé en ce que** le conducteur chauffant (3) s'étend au moins dans une région partielle de la longueur du tuyau en forme de méandres en dessous ou à l'intérieur de la couche extérieure élastomère (4) .

## Claims

1. Heatable flexible multilayer hose (1) with at least one strengthening layer (2) and an elastomeric outer layer (4) and also an electrical heating conductor (3), which serves for heating up a medium flowing in the hose (1), extends over at least a partial region of the length of the hose and comprises a metallic core (5) and a casing (6), the heating conductor (3) being embedded under or within the elastomeric outer layer (4), **characterized in that** the heating conductor is arranged outside the strengthening layer and **in that** the elastomeric outer layer (4) has a lower strength than the heating conductor (3), set such that the heating conductor (3) can be exposed by a radially outwardly acting force, thereby severing the original or weakened elastomeric outer layer (4) but without damaging its metallic core (5) and its casing (6), and can be electrically connected directly to an electrical connection device (9).

2. Heatable flexible multilayer hose (1) according to Claim 1, **characterized in that** the elastomeric outer layer (4) in the unprepared state of the hose has a lower strength than the heating conductor (3) when the radially outwardly acting force is imposed.

3. Heatable flexible multilayer hose (1) according to Claim 1, **characterized in that** the elastomeric outer layer (4) is weakened by removal in its layer thickness with respect to the unprepared state and has a lower strength than the heating conductor (3) when the radially outwardly acting force is imposed.

4. Heatable flexible multilayer hose (1) according to one of Claims 1 to 3, **characterized in that** the heating conductor (3) runs helically under or within the elastomeric outer layer (4), at least in a partial region of the length of the hose.
